**Europäisches Patentamt**

**European Patent Office**

**Office européen des brevets**

(19)

(11) Veröffentlichungsnummer: **0 217 249 B1**

(12) # EUROPÄISCHE PATENTSCHRIFT

(45) Veröffentlichungstag der Patentschrift: **24.07.91**

(51) Int. Cl.⁵: **B29C** 45/26, B29C 45/14, B29C 45/42

(21) Anmeldenummer: **86112985.6**

(22) Anmeldetag: **20.09.86**

(54) Verfahren und Vorrichtung zum Spritzgiessen von mit Gewinde versehenen Kappen und Stopfen aus Kunststoff, wobei die Kappen und Stopfen mit oder ohne im Kunststoff eingebetten Verstärkungskäfig versehen sind.

(30) Priorität: **21.09.85 DE 3533722**

(43) Veröffentlichungstag der Anmeldung:
**08.04.87 Patentblatt 87/15**

(45) Bekanntmachung des Hinweises auf die Patenterteilung:
**24.07.91 Patentblatt 91/30**

(84) Benannte Vertragsstaaten:
**AT BE DE FR GB IT LU NL**

(56) Entgegenhaltungen:
**CH-A- 394 592**
**DE-C- 3 237 298**
**FR-A- 1 338 729**
**FR-A- 1 496 387**
**US-A- 2 361 348**

(73) Patentinhaber: **Drilltec Patents & Technologies Company, Inc.**
**10875 Cempwood Drive**
**Houston, Texas 77043(US)**

(72) Erfinder: **Dreyfuss, Wilfried**
**Dorfstrasse 52**
**W-3111 Eimke(DE)**
Erfinder: **Remp, Thomas E.**
**5555 Del Monte Drive**
**Houston Texas 77056(US)**
Erfinder: **Müller, Kurt**
**Vor der Deine 3**
**W-3110 Uelzen 5(DE)**

(74) Vertreter: **König, Norbert, Dipl.-Phys. Dr. et al Patentanwälte Leine & König Burckhardtstrasse 1**
**W-3000 Hannover 1(DE)**

## Beschreibung

Die Erfindung betrifft eine Vorrichtung nach dem Oberbegriff des Anspruchs 1.

Es sind Spritzgießvorrichtungen bekannt, die zur Ausbildung und Entformung des Innengewindes von Kappen Faltkerne bzw. zur Werkzeugmitte hin bewegbare Seitenschieber und zur Ausbildung und Entformung des Außengewindes von Stopfen sogenannte Backenwerkzeuge bzw. nach außen wegbewegbare Seitenschieber aufweisen. Für die Herstellung von Kappen mit Innengewinde ist es ferner bekannt, das Innengewinde durch einen drehbar gelagerten Gewindekern zu entspindeln bzw. zu entformen. Die Verwendung eines Faltkernes ist technisch aufwendig und teuer. Für jeden herausschraubbaren Kern muß eine eigene, maschinengebundene Entschraubvorrichtung vorhanden sein. Der Kern muß nach hinten aus dem Formteil herausgeschraubt werden, wodurch das Werkzeug relativ lang sein muß. Eine solche Vorrichtung ist ebenfalls recht aufwendig und teuer. Bei Spritzgießvorrichtungen mit Seitenschiebern bzw. Backenwerkzeugen für die Herstellung von Kappen ist es überdies nicht möglich, die zu umspritzenden Verstärkungskäfige in geeigneter Weise zu zentrieren.

Die Aufgabe der vorliegenden Erfindung besteht darin, das Verfahren und die Vorrichtung der eingangs genannten Art so auszubilden, daß die Formung der Kappen und Stopfen mit Gewinde sowie mit Verstärkungskäfig mit einfacheren und variabel einsetzbaren Werkzeugen erreichbar ist.

Diese Aufgabe wird durch die Ausbildung nach dem Kennzeichen des Anspruchs 1 gelöst.

Die erfindungsgemäße Aufgabenlösung schafft ein einfaches, preiswert herstellbares Spritzgießwerkzeug. Das Spritzgießwerkzeug kann insgesamt kürzer gebaut werden und benötigt daher weniger Platz. Die erfindungsgemäße Vorrichtung ist besonders wirtschaftlich bei geringen Stückzahlen einsetzbar.

Vorteilhafte und zweckmäßige Weiterbildungen der erfindungsgemäßen Aufgabenlösung sind in den Unteransprüchen gekennzeichnet.

Die Erfindung soll nachfolgend anhand der beigefügten Zeichnung, in der ein Ausführungsbeispiel dargestellt ist, näher erläutert werden.

Es zeigt

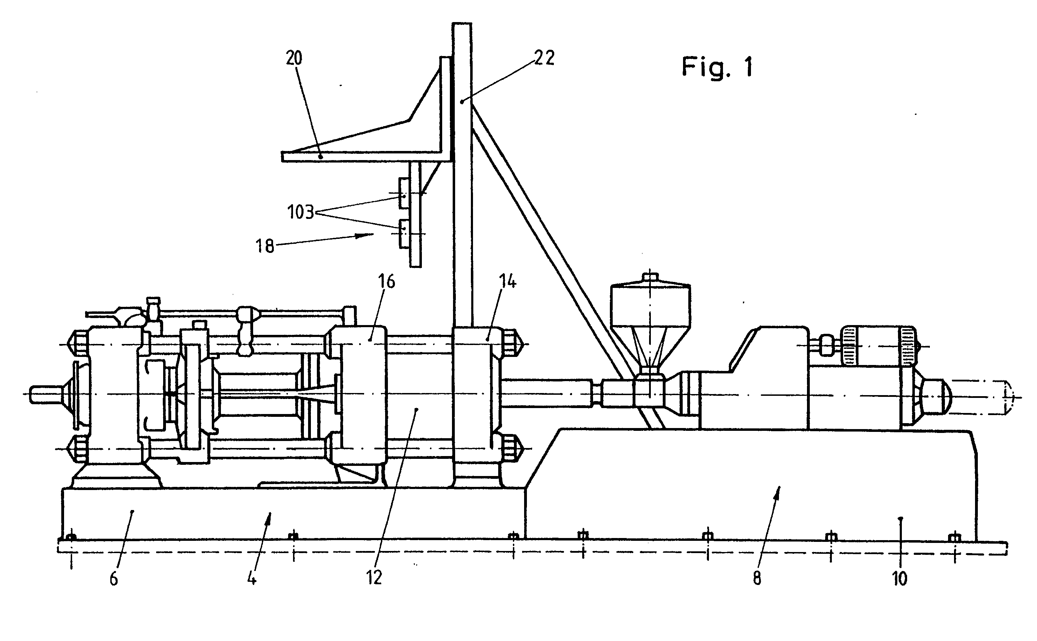

Fig. 1    schematisch eine Spritzgießvorrichtung gemäß vorliegender Erfindung in der Seitenansicht,

Fig. 2    ein bei der Vorrichtung nach Fig. 1 verwendetes Spritzgießwerkzeug zur Herstellung von mit einem Innengewinde und einem eingebetteten Käfig versehenen Kappen,

Fig. 3    ein bei der Vorrichtung nach Fig. 1 verwendetes Spritzgießwerkzeug zur Herstellung von mit einem Innengewinde und einem eingebetteten Käfig versehenen Stopfen.

Die Zeichnung zeigt eine Spritzgießvorrichtung 2 mit einer Schließeinheit 4 auf einer Grundplatte 6 und mit einer Spritzeinheit a auf einer Grundplatte 10. Ein Spritzgießwerkzeug 12 ist mit seinen Teilen auf den Platten 14 und 16 der Schließeinheit 4 befestigt. Die Platte 14 ist ortsfest und die Platte 16 verschieblich angeordnet.

Die Spritzgießvorrichtung 2 ist ferner mit einem Entformungs- bzw. Ausschraubwerkzeug 18 ausgestattet, das an einem Tragarm 20 befestigt ist, der an einem Rahmen 22 aufund abbewegbar ist. Das Entformungswerkzeug 18 taucht nach Beendigung des Formvorganges nach dem Öffnen des Spritzgießwerkzeuges in den Raum zwischen den Teilen des Spritzgießwerkzeuges, fährt an den Formling heran und dreht diesen dann aus dem Werkzeug heraus.

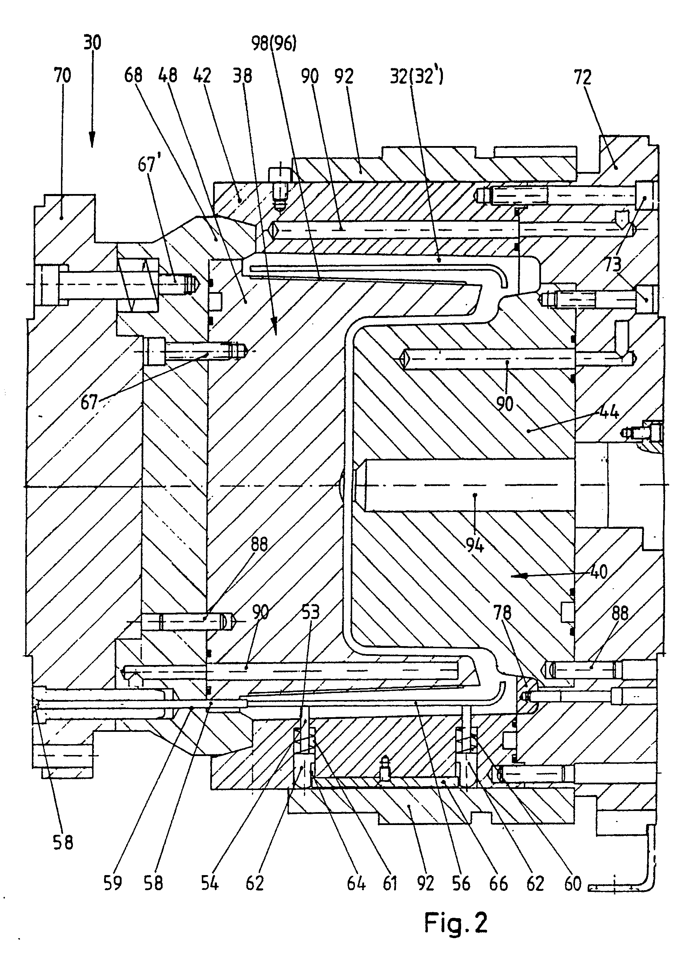

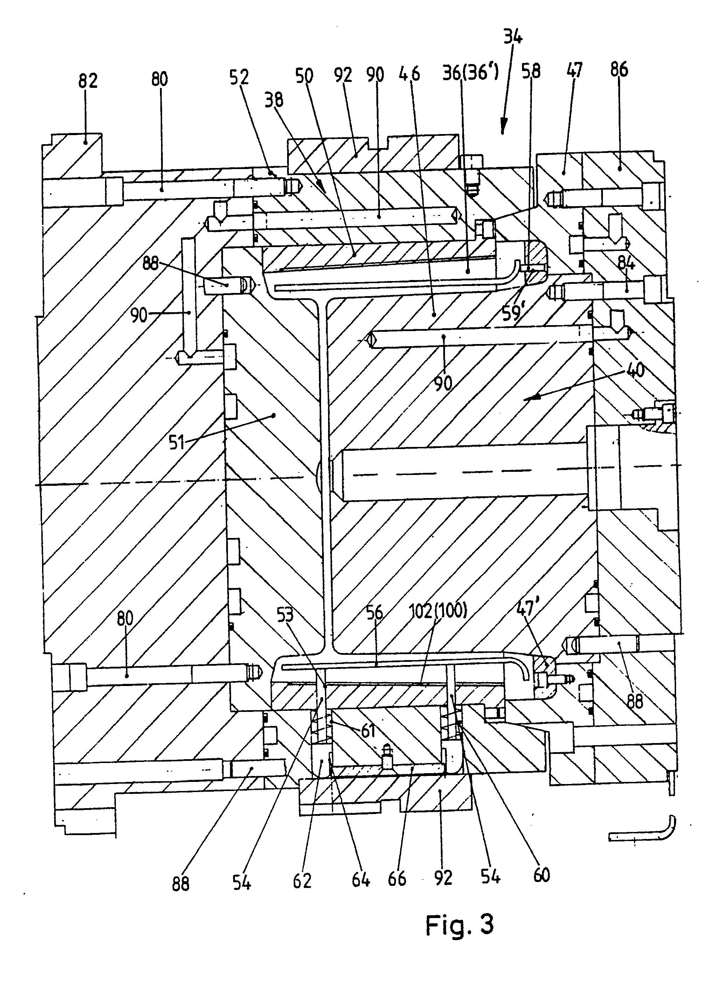

Die Fig. 2 zeigt ein Spritzgießwerkzeug 30 zur Herstellung einer Kappe 32'und die Fig. 3 ein Spritzwerkzeug 34 zur Herstellung eines Stopfens 36'. Gleiche Bezugszeichen bezeichnen gleiche oder vergleichbare Bauteile der Spritzgießwerkzeuge.

Mit 38 sind die beweglichen und mit 40 die feststehenden Werkzeughälften der Spritzgießwerkzeuge 30 und 34 bezeichnet.

Die feststehende Werkzeughälfte 40 besteht beim Werkzeug 30 aus einem Formnest 42 und einem Liftkern 44 und beim Werkzeug 34 aus einem Formkern 46 und einer Kopfplatte 47. Die bewegliche Werkzeughälfte 38 besteht beim Werkzeug 30 aus einem Gewindekern 48 und beim Werkzeug 34 aus einer Gewindebuchse 50 mit Bodenplatte 51 und einem Buchsennest 52.

In der festen Werkzeughälfte 40 des Werkzeugs 30, und zwar im Formnest 42 sowie in der beweglichen Werkzeughälfte 38 des Werkzeugs 34, und zwar im Buchsennest 52, sind in radialen Bohrungen 53 radiale Zentrierstifte 54 zur radialen Zentrierung radialer, umfangsmäßig und axial beabstandeter Zentrierstifte 54 zur radialen Zentrierung eines vorzugsweise aus Metall bestehenden, zu umspritzenden Käfigs 56 angeordnet. Die radialen Zentrierstifte 54 sind durch Druckfedern 60 radial nach außen vorgespannt, die sich am Boden einer äußeren Erweiterung 61 der Bohrungen 53 und einem Kopf 62 der Zentrierstifte 54 abstützen. Der Kopf 62 weist eine seitliche Ausklinkung 64 auf. Die radialen Zentrierstufte werden von außen auf dem Formnest 42 aufgeschraubte Halteplatten 66 gegen Herausfallen gesichert, welche in die Bohrungserweiterung 61 und die Ausklinkung 64 ragen.

Zur axialen Zentrierung des Käfigs 56 dienen axiale Zentrierstifte 58, 58', die beim Werkzeug 30 in Bohrungen 59 des Gewindekerns 48 (Fig. 2) und beim Werkzeug 34 (Fig.3) in Bohrungen 59' von Teilen 47' der Kopfplatte 47 sitzen. Die axialen Zentrierstifte 58 sind axial nach außen durch eine mit dem Gewindekern 48 mit Hilfe von Schrauben 67 verbundene Zentrierplatte 68 und eine mit der Zentrierplatte verschraubte (Schrauben 67') und bezüglich der Zentrierplatte axial um ein bestimmtes Maß verschiebbaren Grundplatte 70 hindurchgeführt, die an der beweglichen Platte 16 der Schließeinheit 4 montierbar ist.

Das Formnest 42 und der Liftkern 44 sind jeweils mit einer gemeinsamen Kopfplatte 72 verschraubt (Schrauben 73), die an der ortsfesten Platte 14 der Schließeinheit (4) montierbar ist.

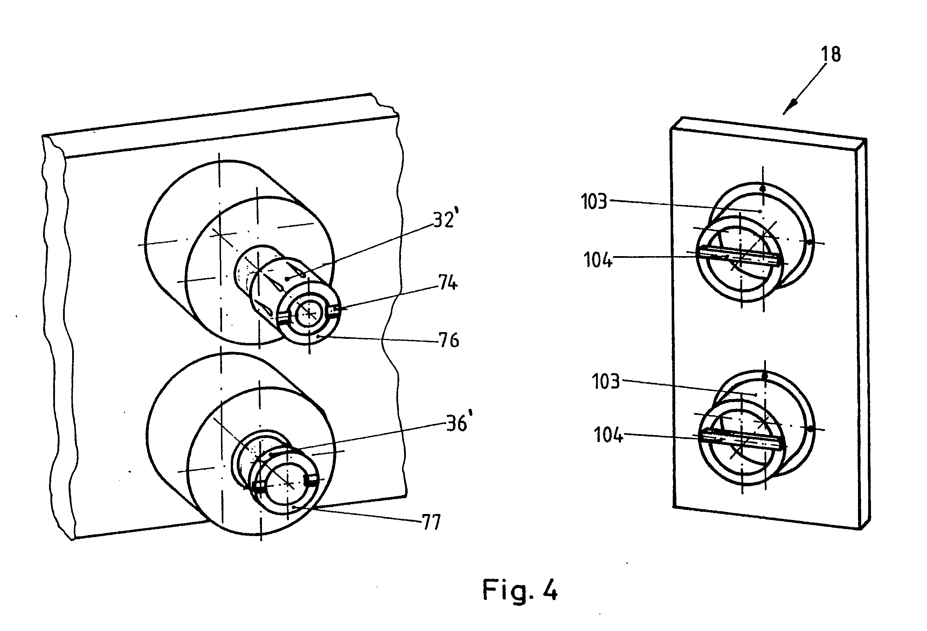

Zur Ausbildung einer diagonalen, zum Ansetzen eines Werkzeugs vorgesehenen Nut 74 (vgl. Fig. 4) in der Stirnwand 76 der Kappe 32' weist die feste Werkzeughälfte 40 wenigstens zwei diagonale Einsätze 78 auf. Die Teile 47' der Kopfplatte 47 stellen ebenfalls Einsätze dar zur Ausbildung einer diagonalen Nut 74' der Stirnwand 77 des Stopfens 36.

Beim Werkzeug 34 (Fig. 3) sind die Gewindebuchse 50 mit Bodenplatte 51 und das Buchsennest 52 mit Hilfe von Schrauben 80 mit einer gemeinsamen Grundplatte 82 verschraubt, die an der beweglichen Platte 16 der Schließeinheit 4 montierbar ist; der Formkern 46 und die Kopfplatte 47 sind mit Hilfe von Schrauben 84 an einer gemeinsamen Flanschplatte 86 befestigt, die an der ortsfesten Platte 14 der Schließeinheit 4 montierbar ist.

Die Werkzeuge 30 und 34 weisen noch mehrere Zylinderstifte 88 als Verdrehsicherung auf.

Kanäle 90 dienen zur Temperierung der Werkzeugteile.

Um die radialen Zentrierstifte 54 in die eingefahrene Zentrierstellung zu bringen, ist ein Ringwerkzeug 92, beispielsweise in Form einer Bajonettzahnglocke vorgesehen, die je nach ihrer Stellung entweder die Zentrierstifte gleichzeitig in die Zentrierstellung drückt oder sie freigibt, so daß sie durch den Druck der Druckfedern 60 radial nach außen gedrückt werden. Die Lage der axialen Zentrierstifte 58, 58' ist im wesentlichen vorgegeben.

In der festen Werkzeughälfte 40 der Werkzeuge 30 und 34 ist jeweils eine Angießbuchse 94 ausgebildet zum Zusammenwirken mit einer Düse der Spritzeinheit 8.

Die Fig. 2 und 3 zeigen die Werkzeuge 30 und 40 jeweils im geschlossenen Zustand, in dem die Kappen 32' und die Stopfen 36' in den formgebenden Hohlräumen 32 und 36 gespritzt bzw. geformt werden.

Nach dem Spritzen und Abkühlen des jeweiligen Formlings (Kappe oder Stopfen) wird die bewegliche Werkzeughälfte 38 in der Zeichnung nach links von der festen Werkzeughälfte 40 wegbewegt und werden die radialen Zentrierstifte 54 aus ihrer Zentrierstellung zurückgezogen. Die Kappe 32' befindet sich dann mit ihrem Innengewinde 96 auf dem Außengewinde 98 des Gewindekerns 48 (Fig. 2) und der Stopfen 36 mit seinem Außengewinde 100 auf dem Innengewinde 102 der Gewindebuchse 50 (Fig. 3).

In der Regel wird eine Mehrfachanordnung von Spritzgießwerkzeugen vorgesehen.

Die Spritzgießwerkzeuge 30 und 34 können auch zur Herstellung von Kappen und Stopfen ohne Käfig verwendet werden. Ist kein Käfig vorgesehen, können die radialen Zentrierungsstifte in ihrer ausgefahrenen Außenstellung verbleiben.

**Patentansprüche**

1. Vorrichtung zum Spritzgießen von mit Gewinde versehenen Formlingen in Form von Kappen und Stopfen aus Kunststoff mit eingebettetem Verstärkungskäfig mit einer Spritzeinheit, mit einer Schließeinheit (4) und mit einem eine feste (40) und eine bewegliche Werkzeughälfte (38) aufweisenden Spritzgießwerkzeug (30,34) dessen bewegliche Werkzeughälfte (38) ein Gewindeteil (48,50) aufweist, **dadurch gekennzeichnet**, daß das Spritzwerkzeug (30, 34) mit radialen, radial bewegbaren Zentrierstiften (54) und mit axialen Zentrierstiften (58, 58' ) zum Zentrieren des Käfigs (56) ausgestattet ist und daß das Gewindeteil (48, 50) drehfest angeordnet und einstückig ausgebildet ist.

2. Vorrichtung nach Anspruch 1, **dadurch gekennzeichnet**, daß die radialen Zentrierstifte (54) im Spritzgießwerkzeug für Kappen mit Käfig durch Federn (60) radial nach außen vorgespannt in radialen Bohrungen (53) angeordnet sind, die in einem den formgebenden Hohlraum (32) begrenzenden Formnest (42) der festen Werkzeughälfte (40) ausgebildet sind und durch eine relativ zum Werkzeug bewegbare Bajonettzahnglocke (92) in Zentrierstellung bewegbar sind.

3. Vorrichtung nach Anspruch 1, **dadurch gekennzeichnet**, daß die axialen Zentrierstifte (58) im Spritzgießwerkzeug für Kappen mit Käfig in der beweglichen Werkzeughälfte (38) angeordnet sind.

4. Vorrichtung nach Anspruch 1, **dadurch gekennzeichnet**, daß die radialen Zentrierstifte (54) im Spritzgießwerkzeug für Stopfen (36') mit Käfig durch Federn (60) radial nach außen vorgespannt in radialen Bohrungen (53) angeordnet sind, die in einer den formgebenden Hohlraum (36) begrenzenden Gewindehülse (50) ausgebildet sind, und durch eine relativ zum Werkzeug bewegbare Bajonettzahnglocke (92) in Justierstellung bewegbar sind.

5. Vorrichtug nach Anspruch 1, **dadurch gekennzeichnet**, daß die axialen Zentrierstifte (58') im Spritzgießwerkzeug für Stopfen mit Käfig in der festen Werkzeughälfte (40) angeordnet sind.

## Claims

1. A device for the injection moulding of threaded blanks in the form of caps and stoppers made of plastic and having an embedded reinforcement cage, having a spray unit, a closing unit (4) and an injection moulding tool (30, 34) comprising a fixed (40) and a mobile tool half (38), the mobile tool half (38) of which comprises a threaded part (48, 50),
   **characterised in that** the injection moulding tool (30,34) is equipped with radial, radially mobile centring pins (54) and with axial centring pins (58, 58') for centring the cage (56) and in that the threaded part (48, 50) is disposed so that it cannot rotate and is constructed in one piece.

2. A device according to Claim 1,
   **characterised in that** in the injection moulding tool for caps having a cage, the radial centring pins (54) are prestressed by springs (60) in the radially outward direction and are disposed in radial bores (53), which are constructed in a mould housing (42) in the fixed tool half (40) limiting the shape-imparting cavity (32) and can be moved into the centring position by a bayonet-type tooth socket (92), which can be moved relative to the tool.

3. A device according to Claim 1,
   **characterised in that** in the injection moulding tool for caps having a cage the axial centring pins (58) are disposed in the mobile tool half (38).

4. A device according to Claim 1,
   **characterised in that** in the injection moulding tool for stoppers (36') having a cage, the radial centring pins (54) are prestressed by springs (60) in the radially outward direction and are disposed in radial bores (53), which are constructed in a threaded sleeve (50) limiting the shape-imparting cavity (36), and can be moved into the adjustment position by a bayonet-type tooth socket (92), which moves relative to the tool.

5. A device according to Claim 1,
   **characterised in that** in the injection moulding tool for stoppers having a cage the axial centring pins (58') are disposed in the fixed tool half (40).

## Revendications

1. Dispositif pour le moulage par injection de pièces de forme munies d'un filetage sous forme de coiffe et de bouchons en matière synthétique avec une cage de renforcement enrobée, avec une unité d'injection, avec une unité de fermeture (4) et avec un outil de moulage par injection (30, 34) présentant une moitié d'outil fixe (40) et une moitié mobile (38), dont la moitié d'outil mobile (38) présente une pièce de filetage,
   caractérisé en ce que l'outil d'injection (30, 34) est équipé de broches de centrage radiales (54) mobiles radialement et broches de centrage axiales (58, 58') pour le centrage de la cage (56), et que la pièce de filetage (48, 50) est disposée fixe en rotation et formée d'une seule pièce.

2. Dispositif selon la revendication 1,
   caractérisé en ce que les broches de centrage radiales (54) sont disposées, dans l'outil de moulage par injection pour coiffes, avec cage, précontraintes radialement vers l'extérieur par des ressorts (60) dans des alésages radiaux (53) qui sont formés dans une cavité de moule (42) de la moitié d'outil fixe (40) limitant le volume creux (32) donnant la forme et sont déplaçables en position de centrage par une cloche dentée à baïonnette (92) déplaçable par rapport à l'outil.

3. Dispositif selon la revendication 1,
   caractérisé en ce que les broches de centrage axiales (58) dans l'outil de moulage par injection pour coiffes avec cage sont disposées dans la moitié d'outil mobile (38).

4. Dispositif selon la revendication 1,
   caractérisé en ce que les broches de centrage radiales (54) sont disposées, dans l'outil de moulage par injection pour bouchons (36') avec cage, précontraintes radialement vers l'extérieur par des ressorts (60) dans des alésages radiaux (53) qui sont formés dans une douille de filetage (50) limitant le volume creux (36) donnant la forme, et sont déplaçables en position d'ajustement par une cloche dentée à baïonnette (92) mobile par rapport à l'outil.

5. Dispositif selon la revendication 1, caractérisé en ce que les broches de centrage axiales (58'), dans l'outil de moulage par injection pour bouchons avec cage, sont disposées dans la moitié d'outil fixe (40).

Fig. 1

Fig. 2

Fig. 3

Fig. 4